# EUROPEAN PATENT APPLICATION

(11) **EP 4 023 459 A1**
(43) Date of publication of application: **06.07.2022**
(21) Application number: 20859493.7
(22) Date of filing: 12.08.2020
(51) Int. Cl.: B60C 1/00, C08L 7/00, C08L 9/00, C08K 3/36

(54) **VULCANIZED RUBBER COMPOSITION, PRODUCTION METHOD FOR VULCANIZED RUBBER COMPOSITION, AND TIRE**

(30) Priority: 28.08.2019 JP 2019156161
(71) Applicant: BRIDGESTONE CORPORATION, Chuo-ku Tokyo 104-8340 (JP)
(72) Inventor: ASAKURA, Takafumi, Tokyo 104-8340 (JP)
(74) Representative: Oxley, Robin John George
(86) International application number: PCT/JP2020/030727
(87) International publication number: WO 2021/039408

(57) **Abstract**

Provided is a vulcanized rubber composition having excellent crack growth resistance, which contains a rubber component containing natural rubber and/or synthetic isoprene rubber, syndiotactic 1,2-polybutadiene, and silica, where a three-dimensional reticulate network is formed in the rubber component matrix, and the three-dimensional reticulate network has a element of crystals of the sPB and a element in which the rubber component and the sPB are compatible with each other.

## Description

### TECHNICAL FIELD

This disclosure relates to a vulcanized rubber composition, a method of producing a vulcanized rubber composition, and a tire.

### BACKGROUND

A vulcanized rubber composition used for a tire is generally required to have high durability. However, diene-based rubbers such as butadiene rubber (BR) and styrene-butadiene rubber (SBR), which have been frequently used in the rubber industry, have a problem that the breaking resistance, especially the cutting resistance and the crack growth resistance, under input of high strain is insufficient. Under such circumstances, various rubber components and rubber compositions have been developed.

As a means of improving the cutting resistance, a technique for blending polybutadiene rubber containing syndiotactic 1,2-polybutadiene (hereinafter, may be abbreviated as "sPB") in a rubber composition has been proposed (see, for example, JP H08-85303 A (PTL 1)). However, the technique of PTL 1 cannot provide sufficient crack growth resistance for the vulcanized rubber composition, and further improvement is required.

For example, a semi-interpenetrating network hydrogel or interpenetrating network hydrogel, that is, a high-strength gel of double network gel has been developed, as described in WO/2003/093337 (PTL 2), where a second monomer component is introduced into a network structure formed by polymerizing and cross-linking a first monomer component, and the second monomer component is polymerized and optionally cross-linked to obtain a semi-interpenetrating network hydrogel or interpenetrating network hydrogel, and in the semi-interpenetrating network hydrogel or interpenetrating network hydrogel, 10 mol% or more of the first monomer component is an unsaturated monomer with an electric charge, 60 mol% or more of the second monomer component is an unsaturated monomer that is electrically neutral, a molar ratio of first monomer component content: second monomer component content is 1: 2 to 1: 100, and when the second monomer component is polymerized and cross-linked, the degree of cross-linking is smaller than that when the first monomer component is polymerized and cross-linked.

### CITATION LIST

### Patent Literature

PTL 1: JP H08-85303 A
PTL 2: WO/2003/093337

### SUMMARY

### (Technical Problem)

It could thus be helpful to provide a vulcanized rubber composition having excellent crack growth resistance and a method of producing the same.

It is also helpful to provide a tire with improved crack growth resistance.

### (Solution to Problem)

To solve the above problem, we have repeatedly studied a vulcanized rubber composition containing a rubber component containing natural rubber and/or synthetic isoprene rubber and syndiotactic 1,2-polybutadiene. As a result, we came up with an idea that, by applying to the vulcanized rubber composition a structure called a three-dimensional network (double network) having a element of crystals of sPB and a element in which the rubber component and the sPB are compatible with each other, the cutting resistance and the crack growth resistance of the vulcanized rubber composition can be significantly improved. As a result of further diligent research, we found that, by containing silica as a filler in the vulcanized rubber composition, extremely excellent crack growth resistance can be realized by a combined effect with the above-described double network structure, thereby completing the present disclosure.

We thus provide the following.

The vulcanized rubber composition of the present disclosure contains a rubber component containing either or both of natural rubber and synthetic isoprene rubber, syndiotactic 1,2-polybutadiene (sPB), and silica, where a three-dimensional reticulate network is formed in the rubber component matrix, and the three-dimensional reticulate network has a element of crystals of the sPB and a element in which the rubber component and the sPB are compatible with each other

With the above configuration, the crack growth resistance can be improved.

In the vulcanized rubber composition of the present disclosure, the total content of fillers including the silica is preferably 35 parts by mass to 80 parts by mass and more preferably 45 parts by mass to 70 parts by mass with respect to 100 parts by mass of the rubber component. In this case, the crack growth resistance of the vulcanized rubber composition can be further improved.

In the vulcanized rubber composition of the present disclosure, the content of the silica is preferably 12 parts by mass or more and more preferably 24 parts by mass or more with respect to 100 parts by mass of the rubber component. In this case, the crack growth resistance of the vulcanized rubber composition can be further improved.

In the vulcanized rubber composition of the present disclosure, the number average molecular weight of the syndiotactic 1,2-polybutadiene is preferably 50,000 to 500,000. In this case, both the crack growth resistance and the cutting resistance of the vulcanized rubber composition can be achieved at a high level.

In the vulcanized rubber composition of the present disclosure, the crystal content of the syndiotactic 1,2-polybutadiene is preferably 7 J/g to 40 J/g. In this case, both the crack growth resistance and the cutting resistance of the vulcanized rubber composition can be achieved at a high level.

In the vulcanized rubber composition of the present disclosure, the melting point of the syndiotactic 1,2-polybutadiene is preferably 100 °C to 180 °C. In this case, both the crack growth resistance and the cutting resistance of the vulcanized rubber composition can be achieved at a high level.

The method of producing a vulcanized rubber composition of the present disclosure includes vulcanizing a rubber composition containing a rubber component containing either or both of natural rubber and synthetic isoprene rubber, syndiotactic 1,2-polybutadiene, and silica at a temperature equal to or higher than the melting point of the syndiotactic 1,2-polybutadiene.

With the above configuration, the crack growth resistance of the obtained vulcanized rubber composition can be improved.

In the method of producing a vulcanized rubber composition of the present disclosure, the total content of fillers including the silica in the rubber composition is preferably 35 parts by mass to 80 parts by mass with respect to 100 parts by mass of the rubber component. In this case, the crack growth resistance of the obtained vulcanized rubber composition can be further improved.

In the method of producing a vulcanized rubber composition of the present disclosure, the content of the silica in the rubber composition is preferably 12 parts by mass or more with respect to 100 parts by mass of the rubber component. In this case, the crack growth resistance of the obtained vulcanized rubber composition can be further improved.

In the method of producing a vulcanized rubber composition of the present disclosure, the number average molecular weight of the syndiotactic 1,2-polybutadiene is preferably 50,000 to 500,000. In this case, both the crack growth resistance and the cutting resistance of the obtained vulcanized rubber composition can be achieved at a high level.

In the method of producing a vulcanized rubber composition of the present disclosure, the crystal content of the syndiotactic 1,2-polybutadiene is preferably 7 J/g to 40 J/g. In this case, both the crack growth resistance and the cutting resistance of the obtained vulcanized rubber composition can be achieved at a high level.

In the method of producing a vulcanized rubber composition of the present disclosure, the melting point of the syndiotactic 1,2-polybutadiene is preferably 100 °C to 180 °C. In this case, both the crack growth resistance and the cutting resistance of the obtained vulcanized rubber composition can be achieved at a high level.

Further, the tire of the present disclosure uses the vulcanized rubber composition of the present disclosure.

With the above configuration, the tire of the present disclosure obtains excellent crack growth resistance.

### (Advantageous Effect)

According to the present disclosure, it is possible to provide a vulcanized rubber composition having excellent crack growth resistance and a method of producing the same.

Further, according to the present disclosure, it is possible to provide a tire with improved crack growth resistance.

### DETAILED DESCRIPTION

The following describes embodiments of the vulcanized rubber composition, the method of producing a vulcanized rubber composition, and the tire of the present disclosure.

### <Vulcanized rubber composition>

The vulcanized rubber composition of the present disclosure contains a rubber component containing natural rubber and/or synthetic isoprene rubber, syndiotactic 1,2-polybutadiene (sPB), and silica, where
a three-dimensional reticulate network is formed in the rubber component matrix, and
the three-dimensional reticulate network has a element of crystals of the sPB and a element in which the rubber component and the sPB are compatible with each other.

In the vulcanized rubber composition of the present disclosure, a structure in which syndiotactic 1,2-polybutadiene (hereinafter, may be referred to as "sPB") forms a three-dimensional reticulate network, that is, a so-called double network structure, is formed in the rubber component matrix of natural rubber or synthetic isoprene rubber. The sPB is a crystalline polymer where the crystal is sacrificed and destroyed under high strain to obtain an effect of dissipating input energy, and the sPB is compatible with natural rubber and synthetic isoprene rubber. Therefore, it is possible to partially immobilize the sPB in the rubber component containing natural rubber and synthetic isoprene rubber and to form a three-dimensional reticulate network (double network) containing a element of crystals of sPB and a element of compatible rubber component/sPB in the vulcanized rubber.

Because of the double network structure, a high energy dissipation effect caused by the element of crystals of sPB and flexibility caused by the element of compatible rubber component/sPB can be obtained. Therefore, the vulcanized rubber composition of the present disclosure can achieve excellent crack growth resistance and cutting resistance. Further, the sPB does not have crystal collapse at the input of low strain that contributes to rolling resistance and has a larger number average molecular weight and less terminal chain movement than other general-purpose resins, so that deterioration of low heat generating properties and the like is suppressed.

In addition, the vulcanized rubber composition of the present disclosure further contains silica, and a combined effect of the silica and the above-described double network structure can dramatically improve the crack growth resistance.

A method of confirming that the above-described three-dimensional reticulate network (double network) structure has been formed or not is not particularly limited. For example, by confirming with a phase image of an atomic force microscope (AFM) that the sPB has formed a co-continuous network structure in the natural rubber and/or isoprene rubber which is a matrix polymer, the formation of the double network can be confirmed. Further, the formation of the double network can be inferred from the composition of the rubber composition before vulcanization and the production conditions such as the vulcanization temperature.

### (Rubber component)

The vulcanized rubber composition of the present disclosure contains natural rubber (NR) and/or synthetic isoprene rubber (IR) as a rubber component. When the rubber component contains one or more of natural rubber and synthetic isoprene rubber, the above-described double network of sPB is formed in the vulcanized rubber composition, and excellent low heat generating properties and cutting resistance can be obtained.

In the vulcanized rubber composition of the present disclosure, the natural rubber and synthetic isoprene rubber usually account for 100 % of the rubber component, yet other rubbers may be contained in a small amount as long as the effects of the present disclosure are not impaired.

### (Syndiotactic 1,2-polybutadiene)

The vulcanized rubber composition of the present disclosure contains syndiotactic 1,2-polybutadiene (sPB). By containing the sPB together with the natural rubber and/or the synthetic isoprene rubber, the above-described double network can be formed in the vulcanized rubber composition, and excellent low heat generating properties and cutting resistance can be obtained.

In the syndiotactic 1,2-polybutadiene, the amount of 1,2-bond of the sPB (the amount of 1,2-bond in the microstructure of the sPB) is preferably 80 mass% or more and more preferably 85 mass% or more. This is because, in this way, the above-described three-dimensional reticulate network (double network) can be more reliably formed, and the low heat generating properties and cutting resistance can be further improved. From the same viewpoint, the amount of 1,2-bond of the sPB may be 90 mass% or more, 91 mass% or more, 92 mass% or more, 93 mass% or more, 94 mass% or more, or 95 mass% or more.

In the present disclosure, the amount of 1,2-bond of the sPB can be determined by ¹H and ¹³C nuclear magnetic resonance (NMR) analysis.

Further, in the syndiotactic 1,2-polybutadiene, the syndiotacticity in the 1,2-bond of the sPB is preferably 60 % or more and more preferably 65 % or more. This is because, in this way, the above-described double network can be more reliably formed, and the low heat generating properties and cutting resistance can be further improved. From the same viewpoint, the syndiotacticity in the 1,2-bond of the sPB may be 70 % or more, 75 % or more, 80 % or more, 85 % or more, 90 % or more, 95 % or more, or 100 %.

In the present disclosure, the syndiotacticity in the 1,2-bond of the sPB can be determined by ¹H and ¹³C nuclear magnetic resonance (NMR) analysis.

The syndiotactic 1,2-polybutadiene may be a copolymer obtained by copolymerizing a small amount of conjugated diene such as 1,3-pentadiene and 1-pentyl-1,3-butadiene in addition to 1,3-butadiene, or it may be a homopolymer of 1,3-butadiene.

When the sPB contains a unit derived from a conjugated diene other than 1,3-butadiene, the ratio of a unit derived from 1,3-butadiene in all repeating units of the sPB may be 80 % or more, 85 % or more, 90 % or more, 95 % or more, 98 % or more, 99 % or more, or 100 % (consisting only of units derived from 1,3-butadiene) in one embodiment.

The crystal content of the syndiotactic 1,2-polybutadiene is preferably 7 J/g to 40 J/g. This is because, by setting the crystal content of the sPB to 7 J/g or more, the above-described double network can be more reliably formed, and the cutting resistance can be further improved. From the same viewpoint, the crystal content of the sPB is more preferably 15 J/g or more and still more preferably 17 J/g or more. On the other hand, when the crystal content of the sPB is 40 J/g or less, the crack growth resistance of the vulcanized rubber composition can be further improved. From the same viewpoint, the crystal content of the sPB is more preferably 36 J/g or less.

The crystal content of the sPB is the amount of heat of melting, and it is an index indicating how much the sPB is crystallized. It can be derived from the melting peak measured by a differential scanning calorimeter.

The number average molecular weight of the syndiotactic 1,2-polybutadiene is not particularly limited. However, it is preferably 50,000 to 500,000 from the viewpoint of achieving both low heat generating properties and cutting resistance of the vulcanized rubber composition at a higher level. When the number average molecular weight of the sPB is 50,000 or more, the cutting resistance when applied to a tire can be improved. From the same viewpoint, the number average molecular weight of the sPB may be 100,000 or more, 110,000 or more, 120,000 or more, 130,000 or more, 140,000 or more, 150,000 or more, 160,000 or more, 170,000 or more, 180,000 or more, 190,000 or more, or 200,000 or more. On the other hand, when the number average molecular weight of the sPB is 500,000 or less, it is possible to prevent deterioration of crack growth resistance and riding comfort when applied to a tire. From the same viewpoint, the number average molecular weight of the sPB may be 400,000 or less, 390,000 or less, 380,000 or less, 370,000 or less, 360,000 or less, 350,000 or less, 340,000 or less, 330,000 or less, 320,000 or less, 310,000 or less, or 300,000 or less.

Although the melting point of the syndiotactic 1,2-polybutadiene is not particularly limited, it is preferably 100 °C to 180 °C from the viewpoint of further improving the cutting resistance of the vulcanized rubber composition. When the melting point of the sPB is 180 °C or lower, crystallization of the sPB proceeds easily during vulcanization of the rubber composition, and the above-described double network can be more reliably formed. From the same viewpoint, the melting point of the sPB may be 170 °C or lower or 160 °C or lower. On the other hand, when the melting point of the sPB is 100 °C or higher, deterioration of the heat resistance and the strength of the vulcanized rubber can be suppressed. From the same viewpoint, the melting point of the sPB may be 110 °C or higher or 120 °C or higher.

In the present disclosure, the content of the syndiotactic 1,2-polybutadiene in the vulcanized rubber composition is not particularly limited, and it can be appropriately changed depending on the required cutting resistance and other performance. For example, from the viewpoint of achieving both crack growth resistance and cutting resistance of the vulcanized rubber composition at a higher level, the content of the sPB is preferably 10 parts by mass to 30 parts by mass with respect to 100 parts by mass of the rubber component. When the content of the sPB is 10 parts by mass or more with respect to 100 parts by mass of the rubber component, the energy dissipation effect is enhanced, and better crack growth resistance and cutting resistance can be obtained. From the same viewpoint, the content of the sPB may be 15 parts by mass or more and 20 parts by mass or more with respect to 100 parts by mass of the rubber component. On the other hand, when the content of the sPB is 30 parts by mass or less with respect to 100 parts by mass of the rubber component, deterioration of the rolling resistance and the crack growth resistance can be suppressed.

A method of obtaining the sPB is not particularly limited. You may produce the sPB by yourself or use a commercially available one.

For example, the sPB may be obtained by polymerizing a 1,3-butadiene monomer in an organic solvent containing an aliphatic solvent using an iron-based catalyst composition, a chromium-based catalyst composition, a cobalt-based catalyst composition, or the like. Specifically, it can be prepared with the polymerization methods described in JP 2006-063183 A, JP 2000-119324 A, JP 2004-528410 A, JP 2005-518467 A, JP 2005-527641 A, JP 2009-108330 A, JP H07-25212 A, JP H06-306207 A, JP H06-199103 A, JP H06-92108 A, JP H06-87975 A, and the like.

Examples of the iron-based catalyst composition include a catalyst composition obtained by mixing (a) an iron-containing compound, (b) an α-acyl phosphodiester, and (c) an organoaluminum compound; a catalyst composition obtained by mixing (a) an iron-containing compound, (b) an α-acyl phosphodiester, (c) an organoaluminum compound, and other organometallic compounds or Lewis bases; and a catalyst composition containing (a) an iron-containing compound, (b) dihydrocarbyl hydrogen phosphite, and (c) an organoaluminum compound.

The (a) iron-containing compound is not particularly limited, and suitable examples thereof include iron carboxylate, organic iron phosphate, organic iron phosphonate, organic iron phosphinate, iron carbamate, iron dithiocarbamate, iron xanthogenate, iron α-diketonate, iron alkoxide or aryl oxide, and organic iron compounds.

Examples of the chromium-based catalyst composition include a three-component catalyst system containing (a) a chromium-containing compound, (b) a hydrogenated alkylaluminum compound, and (c) a hydrogen phosphite ester. The component (a) of the chromium-based catalyst composition of the present disclosure may be various chromium-containing compounds. In general, it is advantageous to use a chromium-containing compound that is soluble in a hydrocarbon solvent such as aromatic hydrocarbon, aliphatic hydrocarbon or alicyclic hydrocarbon. However, an insoluble chromium-containing compound simply dispersed in a polymerization medium can also produce a catalytically active species. Therefore, no limitation should be placed on the chromium-containing compound to ensure the solubility.

Examples of chromium in the (a) chromium-containing compound include, but are not limited to, chromium carboxylate, chromium β-diketonate, chromium alkoxide or allyloxide, halogenated chromium, pseudo-halogenated chromium, and organic chromium compounds.

Examples of the cobalt-based catalyst composition include a catalyst system containing soluble cobalt such as cobalt octoate, cobalt 1-naphthate and cobalt benzoate, an organoaluminum compound such as trimethylaluminum, triethylaluminum, tributylaluminum and triphenylaluminum, and carbon disulfide.

The commercially available sPB may be, for example, JSR RB^{®} (JSR RB is a registered trademark in Japan, other countries, or both) series such as JSR RB^{®} 810, 820, 830, 840 of JSR Corporation.

### (Filler)

The vulcanized rubber composition of the present disclosure contains silica as a filler in addition to the above-described rubber component and syndiotactic 1,2-polybutadiene.

By containing the silica, the low heat generating properties and cutting resistance of the vulcanized rubber composition can be improved, and a combined effect with the above-described double network structure can significantly improve the crack growth resistance of the vulcanized rubber composition.

The type of the silica is not particularly limited, and examples thereof include wet silica (hydrous silicic acid), dry silica (silicic anhydride), calcium silicate, and aluminum silicate, among which wet silica is preferably used.

The BET specific surface area (measured according to ISO 5794/1) of the wet silica is preferably 40 m²/g to 350 m²/g. Silica having a BET specific surface area in this range has an advantage that it can achieve both the rubber reinforcing properties and the dispersibility in the rubber component. From this viewpoint, silica having a BET specific surface area of 80 m²/g to 300 m²/g is more preferable. The nitrogen adsorption specific surface area of the wet silica is preferably 40 m²/g to 350 m²/g, more preferably 100 m²/g to 350 m²/g, further preferably 150 m²/g to 350 m²/g, and even more preferably 200 m²/g to 350 m²/g. Commercially available products such as "Nipsil AQ" and "Nipsil KQ" manufactured by Tosoh Silica Corporation and "Ultrasil VN3" manufactured by Evonik Industries AG can be used as the silica, for example. The silica may be used alone or in combination of two or more.

The content of the silica is not particularly limited. However, from the viewpoint of achieving better crack growth resistance, it is preferably 12 parts by mass or more and more preferably 24 parts by mass or more with respect to 100 parts by mass of the rubber component.

The upper limit of the content of the silica is not particularly limited, either. From the viewpoint of preventing deterioration of the processability of the rubber composition before vulcanization and deterioration of the fuel efficiency of the vulcanized rubber composition, it is preferably 80 parts by mass or less with respect to 100 parts by mass of the rubber component, for example.

The filler may contain a filler other than the silica. The filler other than the silica is not particularly limited, and examples thereof include carbon black, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate.

Among the above, it is preferable to contain carbon black from the viewpoint of improving the reinforcing properties and wear resistance of the vulcanized rubber composition. These fillers may be used alone or in combination of two or more. The filler can also be blended without carbon black.

The type of the carbon black is not particularly limited, and examples thereof include carbon black of SAF, ISAF, IISAF, N339, HAF, FEF, and GPF grade. The nitrogen adsorption specific surface area (measured according to JIS K 6217-2: 2001, N₂SA) of the carbon black is preferably 20 m²/g to 160 m²/g, more preferably 25 m²/g to 160 m²/g, still more preferably 25 m²/g to 150 m²/g, and particularly preferably 30 m²/g to 150 m²/g. The dibutyl phthalate oil absorption of the carbon black (measured according to JIS K 6217-4: 2008, DBP) is preferably 40 ml/100 g to 160 ml/100 g, more preferably 40 ml/100 g to 150 ml/100 g, still more preferably 50 ml/100 g to 150 ml/100 g, further preferably 60 ml/100 g to 150 ml/100 g, and particularly preferably 60 ml/100 g to 140 ml/100 g. The carbon black may be used alone or in combination of two or more.

The total content of fillers including the silica is preferably 35 parts by mass or more and more preferably 45 parts by mass or more with respect to 100 parts by mass of the rubber component. When the total content of fillers including the silica is 35 parts by mass or more with respect to 100 parts by mass of the rubber component, better crack growth resistance can be obtained.

Further, the total content of fillers including the silica is preferably 80 parts by mass or less and more preferably 70 parts by mass or less with respect to 100 parts by mass of the rubber component. When the total content of fillers including the silica is 80 parts by mass or less with respect to 100 parts by mass of the rubber component, it is possible to suppress a decrease in flexibility of the vulcanized rubber composition and to obtain better crack growth resistance.

In the case where silica is used as the filler, the rubber composition before vulcanization preferably further contains a silane coupling agent such as bis (3-triethoxysilylpropyl) polysulfide, bis (3-triethoxysilylpropyl) disulfide, and 3-trimethoxysilylpropylbenzothiadyltetrasulfide. The blending amount of the silane coupling agent in the rubber composition before vulcanization varies depending on the type of the silane coupling agent or the like, but it is preferably selected in a range of 2 parts by mass to 20 parts by mass with respect to 100 parts by mass of the silica.

### (Other components)

In addition to the above-described rubber component, syndiotactic 1,2-polybutadiene and fillers such as silica, the vulcanized rubber composition of the present disclosure may appropriately contain other components that are commonly used in the rubber industry, depending on the required performance.

Examples of the other components include a vulcanizing agent (cross-linking agent), a vulcanization accelerator, a vulcanization retarder, an age resistor, a reinforcing agent, a softener, a vulcanizing co-agent, a coloring agent, a flame retardant, a lubricant, a foaming agent, a plasticizer, a processing aid, an antioxidant, an anti-scorch agent, an ultraviolet rays protecting agent, an antistatic agent, an color protecting agent, and an oil, which can be contained in the rubber composition before vulcanization. These components may be used alone or in combination of two or more.

In a case of sulfur cross-linking, examples of the vulcanizing agent include sulfur-containing cross-linking agents such as sulfur (powdered sulfur and the like), morpholine/disulfide, and high molecular weight polysulfide. In a case of non-sulfur cross-linking, examples thereof include peroxide cross-linking such as tert-butyl hydroperoxide, 1,1,3,3-tetramethylbutyl hydroperoxide, cumene hydroperoxide, dicumyl peroxide, di-tert-butyl peroxide, diisopropyl benzene hydroperoxide, and tert-butylcumyl peroxide.

Examples of the vulcanization accelerator include a sulfenamide-based vulcanization accelerator, a thiazole-based vulcanization accelerator, a guanidine-based vulcanization accelerator, a thiourea-based vulcanization accelerator, a thiuram-based vulcanization accelerator, a dithiocarbamine-based vulcanization accelerator, and a xanthate-based vulcanization accelerator.

Examples of the co-cross-linking agent in the peroxide cross-linking include ethylene glycol dimethacrylate, trimethylolpropane trimethacrylate, zinc methacrylate, and magnesium methacrylate.

A method of preparing the rubber composition before vulcanization is not particularly limited, and a known method may be used. For example, it may be obtained by adding each component at the same time or in an arbitrary order and kneading the components using a kneader such as a Banbury mixer, a roll, or an internal mixer.

### <Method of producing vulcanized rubber composition>

Next, the method of producing a vulcanized rubber composition of the present disclosure will be described.

The method of producing a vulcanized rubber composition of the present disclosure includes vulcanizing a rubber composition containing a rubber component containing natural rubber and/or synthetic isoprene rubber, syndiotactic 1,2-polybutadiene, and silica at a temperature equal to or higher than the melting point of the syndiotactic 1,2-polybutadiene.

By performing vulcanization at a temperature equal to or higher than the melting point of the syndiotactic 1,2-polybutadiene, the 1,2-polybutadiene can be once melted and recrystallized during the vulcanization. As a result, the above-described three-dimensional reticulate network (double network) can be formed in the vulcanized rubber composition. The obtained vulcanized rubber composition is excellent in crack growth resistance.

The components of the rubber composition before vulcanization may include a rubber component containing natural rubber and/or synthetic isoprene rubber, syndiotactic 1,2-polybutadiene, and silica. It is acceptable to contain components the same as those described in the vulcanized rubber composition of the present disclosure.

The conditions for kneading the rubber composition are not particularly limited. For example, from the viewpoint of dissolving a large amount of the sPB in the rubber component and more reliably forming the above-described double network in the vulcanized rubber composition, the temperature at which the syndiotactic 1,2-polybutadiene, natural rubber and/or synthetic isoprene rubber, and silica are kneaded (kneading during which a masterbatch is kneaded) can be set to a temperature 10 °C to 100 °C higher than the melting point of the sPB.

From the same viewpoint, the temperature during the kneading is more preferably 10 °C to 50 °C higher than the melting point of the sPB and still more preferably 12 °C to 50 °C higher than the melting point of the sPB.

The kneading of the unvulcanized rubber composition may be performed, for example, using a kneader such as a Banbury mixer, a roll, or an internal mixer.

The temperature during kneading in the production method means the temperature of the masterbatch when the masterbatch of the unvulcanized rubber composition is discharged from the kneader. Specifically, it is a temperature obtained by measuring the internal temperature of the masterbatch immediately after it is discharged from the kneader with a temperature sensor or the like during the kneading of the masterbatch. However, if there is a temperature measuring means for the rubber composition in the kneader, it is acceptable to measure the temperature of the masterbatch at the time of discharging.

As used herein, the masterbatch is a mixture obtained in a process where the rubber component, the sPB, and the silica are kneaded but the cross-linking agent and the vulcanization accelerator are not blended.

The vulcanization temperature in the method of producing a vulcanized rubber of the present disclosure is equal to or higher than the melting point of the syndiotactic 1,2-polybutadiene.

The vulcanization temperature in the production method is preferably equal to or higher than the melting point of the sPB. In the production method, it is considered important to perform vulcanization at a temperature equal to or higher than the melting point of the sPB to form a double network. The reason is considered as follows. By vulcanizing the obtained unvulcanized rubber composition at a temperature equal to or higher than the melting point of the sPB, the sPB is partially soluble in the rubber component and is immobilized as a network in the rubber component, thereby forming the above-described double network in the vulcanized rubber composition. However, this does not mean that the double network is not formed at all when vulcanization is performed at a temperature lower than the melting point of the sPB. This is because, even when vulcanization is performed at a temperature lower than the melting point of the sPB, a part of the sPB can be melted to form at least a part of the double network. For example, it is considered that at least a part of the double network can be formed even if the temperature is -15 °C from the melting point or higher but lower than the melting point.

As a result, the obtained vulcanized rubber composition obtains excellent cutting resistance without deteriorating the low heat generating properties. From the same viewpoint, the vulcanization temperature is preferably 5 °C or higher, more preferably 10 °C or higher, and still more preferably 15 °C or higher than the melting point of the sPB.

The temperature during vulcanization in the production method is the highest temperature achieved as the vulcanization starts and develops (usually, it is the set temperature of the vulcanization apparatus).

Further, the vulcanization in the production method may use a known vulcanization system, which may be a sulfur vulcanization system or a non-sulfur vulcanization system.

### <Tire>

The tire of the present disclosure uses the vulcanized rubber composition of the present disclosure in a tread member.

In this way, the tire of the present disclosure can obtain excellent crack growth resistance.

The element of the tire using the vulcanized rubber composition of the present disclosure may be a element other than the above-mentioned tread member. For example, the vulcanized rubber composition can be suitably used in a element such as a sidewall element where high durability (especially cutting resistance) is required.

### EXAMPLES

The following describes the present disclosure in more detail with reference to examples, but the present disclosure is not limited to the following examples.

### (sPB)

The syndiotactic 1,2-polybutadiene used in the examples was "JSR RB^{®} 840" manufactured by JSR Corporation. The sPB had a 1,2-bond content of 84 mass%, a melting point of 122 °C, a number-average molecular weight of 66,000, and a crystal content of 21 J/g.

The melting point, weight-average number-average molecular weight (Mw), 1,2-bond content, and degree of crystallinity of the sPB were measured with the following methods.

### (Melting point of syndiotactic 1,2-polybutadiene)

A sample of syndiotactic 1,2-polybutadiene was placed in a differential scanning calorimetry (DSC) device and measured with a method in which the melting peak temperature of a DSC curve when the temperature was raised at a heating rate of 10 °C/min was used as the melting point.

### (Weight-average number-average molecular weight (Mw))

It was measured by gel permeation chromatography [GPC: HLC-8220/HT manufactured by Tosoh] using a differential refractometer as a detector, and a polystyrene-equivalent value was indicated with monodisperse polystyrene as a standard. The column was GMHHR-H(S)HT [manufactured by Tosoh], the eluent was trichlorobenzene, and the measurement temperature was 140 °C.

### (1,2-bond content of butadiene, and syndiotacticity in 1,2-bond)

They were determined by ¹H and ¹³C nuclear magnetic resonance (NMR) analysis of the syndiotactic 1,2-polybutadiene.

### (Crystal content)

The crystal content (J/g) was obtained by calculating the area of the melting peak observed from -100 °C to 200 °C obtained when the melting point was measured using differential scanning calorimetry (manufactured by TA Instruments).

### <Examples 1 to 2, and Comparative Examples 1 to 4>

A non-production kneading process (temperature during kneading: 160 °C) was performed with the composition listed in Table 1. Next, the components listed in Table 1 were added to the masterbatch obtained from the non-production kneading process, and a production vulcanization process (temperature during vulcanization: 150 °C) was performed to obtain each sample of vulcanized rubber composition.

With respect to each sample of vulcanized rubber composition, it is considered that a three-dimensional reticulate network (double network) having a element of crystals of the sPB and a element in which the rubber component and the sPB are compatible with each other had been formed in the vulcanized rubbers of the samples of Comparative Example 2, Example 1 and Example 2, based on the presence or absence of sPB content, melting point, and vulcanization temperature conditions.

Note that the composition listed in Table 1 is an amount (parts by mass) with respect to 100 parts by mass of the rubber component.

Each obtained sample of vulcanized rubber compositions was evaluated in terms of rolling resistance, crack growth resistance and wear resistance with the following methods. The results are listed in Table 1.

### (1) Rolling resistance

The tangent loss tanδ of each sample of vulcanized rubber composition was measured under conditions of frequency of 15 Hz, tensile strain of 2 %, and a temperature of 24 °C using a viscoelasticity meter (manufactured by Ueshima Seisakusho Co., Ltd.).

The evaluation was indicated as an index obtained with the reciprocal of the measured value of tanδ. The index value of Comparative Example 2 was indicated as an index with the reciprocal of Comparative Example 1 being 100, the index value of Example 1 was indicated as an index with the reciprocal of Comparative Example 3 being 100, and the index value of Example 2 was indicated as an index with the reciprocal of Comparative Example 4 being 100. The larger the index value is, the smaller the tanδ is, the better the low rolling resistance is.

### (2) Crack growth resistance

The tear strength of each sample of vulcanized rubber composition was measured in a shape of trousers according to JIS K 6252 using a tensile tester.

The evaluation was indicated as follows. The index value of Comparative Example 2 was indicated as an index with the tear strength of Comparative Example 1 being 100, the index value of Example 1 was indicated as an index with the tear strength of Comparative Example 3 being 100, and the index value of Example 2 was indicated as an index with the tear strength of Comparative Example 4 being 100. The larger the index value is, the lager the tear strength is, the better the crack growth resistance is.

### (3) Wear resistance

A disc-like test piece (diameter 16.2 mm × thickness 6 mm) was cut out from each sample of vulcanized rubber composition, the test piece was used to conduct a Lambourn wear test according to JIS-K6264-2: 2005, and the amount of wear (mm³) at 40 °C and a slip rate of 25 % was measured.

The evaluation was indicated as an index obtained with the reciprocal of the amount of wear. The index value of Comparative Example 2 was indicated as an index with the reciprocal of Comparative Example 1 being 100, the index value of Example 1 was indicated as an index with the reciprocal of Comparative Example 3 being 100, and the index value of Example 2 was indicated as an index with the reciprocal of Comparative Example 4 being 100. The larger the index value is, the better the wear resistance is.

| No. | | Comparative Example 1 | Comparative Example 2 | Comparative Example 3 | Example 1 | Comparative Example 4 | Example 2 |
|---|---|---|---|---|---|---|---|
| Chemical composition | Natural rubber | 100 | 100 | 100 | 100 | 100 | 100 |
| | sPB | - | 20 | - | 20 | - | 20 |
| | Carbon black ∗1 | 60 | 60 | 48 | 48 | 36 | 36 |
| | Silica ^{∗}2 | - | - | 12 | 12 | 24 | 24 |
| | Silane coupling agent ∗3 | - | - | 1 | 1 | 1 | 1 |
| | Stearic acid | 2 | 2 | 2 | 2 | 2 | 2 |
| | Wax ^{∗}4 | 2 | 2 | 2 | 2 | 2 | 2 |
| | Age resistor 6C ∗5 | 1 | 1 | 1 | 1 | 1 | 1 |
| | Zinc oxide | 1.3 | 1.3 | 1.3 | 1.3 | 1.3 | 1.3 |
| | Sulfur | 3 | 3 | 3 | 3 | 3 | 3 |
| | Age resistor TMQ ^{∗}6 | 0.3 | 0.3 | 0.3 | 0.3 | 0.3 | 0.3 |
| | Vulcanization accelerator ^{∗}7 | 0.8 | 0.8 | 0.8 | 0.8 | 0.8 | 0.8 |
| Evaluation | Rolling resistance | 100 | 111 | 100 | 108 | 100 | 119 |
| | Crack growth resistance | 100 | 501 | 100 | 978 | 100 | 1360 |
| | Wear resistance | 100 | 62 | 100 | 71 | 100 | 80 |

| | | | | | | | |
|---|---|---|---|---|---|---|---|
| ∗1 Carbon black: ISAF grade carbon black, "Asahi #80" manufactured by Asahi Carbon Co., Ltd. *2 Silica: "Nipsil KQ" manufactured by Tosoh Silica Corporation, having nitrogen adsorption specific surface area of 235 m²/g *3 Silane coupling agent: "ABC-856" manufactured by Shin-Etsu Chemical Co., Ltd. *4 Wax: microcrystalline wax, manufactured by Seiko-Chemical Co., Ltd. ∗5 Age resistor 6C: N-(1,3-dimethylbutyl)-N'-phenyl-p-phenylenediamine, "NOCRAC^{®} (NOCRAC is a registered trademark in Japan, other countries, or both) 6C" manufactured by Ouchi Shinko Chemical Industrial Co., Ltd. ∗6 Age resistor TMQ: 2,2,4-trimethyl-1,2-dihydroquinoline polymer, "NOCRAC^{®} 224" manufactured by Ouchi Shinko Chemical Industrial Co., Ltd. *7 Vulcanization accelerator: N-(cyclohexyl)-2-benzothiazolesulfenamide, "NOCCELER^{®} (NOCCELER is a registered trademark in Japan, other countries, or both) CZ" manufactured by Ouchi Shinko Kagaku Kogyo Co., Ltd. | | | | | | | |

From Table 1, it can be seen that the vulcanized rubber compositions of Examples according to the present disclosure had an extremely excellent effect in crack growth resistance.

In addition, improvement in crack growth resistance was observed by comparing Comparative Example 1 and Comparative Example 2, both of which were samples containing only carbon black as a filler. It also can be seen that the effect of improving the crack growth resistance is further increased by comparing Comparative Example 3 and Example 1, both of which were samples containing carbon black and silica as fillers. Further, it can be seen that the effect of improving the crack growth resistance is more remarkable by comparing Comparative Example 4 and Example 2, which were samples in which the content ratio of silica was increased.

From these results, it can be seen that when a double network is formed and silica is contained in the vulcanized rubber composition, excellent crack growth resistance is realized by a combined effect of these.

Furthermore, when the sample of Comparative Example 1 and the samples of Examples 1 and 2 are compared, the samples of Examples had good results in terms of both rolling resistance and wear resistance.

### INDUSTRIAL APPLICABILITY

According to the present disclosure, it is possible to provide a vulcanized rubber composition having excellent crack growth resistance and a method of producing the same.

Further, according to the present disclosure, it is possible to provide a tire with improved crack growth resistance.

## Claims

1. A vulcanized rubber composition, comprising a rubber component containing either or both of natural rubber and synthetic isoprene rubber, syndiotactic 1,2-polybutadiene that is indicated as sPB, and silica, wherein
a three-dimensional reticulate network is formed in the rubber component matrix, and
the three-dimensional reticulate network has a element of crystals of the sPB and a element in which the rubber component and the sPB are compatible with each other.

2. The vulcanized rubber composition according to claim 1,
wherein a total content of fillers including the silica is 35 parts by mass to 80 parts by mass with respect to 100 parts by mass of the rubber component.

3. The vulcanized rubber composition according to claim 2,
wherein a total content of fillers including the silica is 45 parts by mass to 70 parts by mass with respect to 100 parts by mass of the rubber component.

4. The vulcanized rubber composition according to any one of claims 1 to 3, wherein a content of the silica is 12 parts by mass or more with respect to 100 parts by mass of the rubber component.

5. The vulcanized rubber composition according to claim 4,
wherein a content of the silica is 24 parts by mass or more with respect to 100 parts by mass of the rubber component.

6. The vulcanized rubber composition according to any one of claims 1 to 5, wherein a number average molecular weight of the syndiotactic 1,2-polybutadiene is 50,000 to 500,000.

7. The vulcanized rubber composition according to any one of claims 1 to 6, wherein a crystal content of the syndiotactic 1,2-polybutadiene is 7 J/g to 40 J/g.

8. The vulcanized rubber composition according to any one of claims 1 to 7, wherein a melting point of the syndiotactic 1,2-polybutadiene is 100 °C to 180 °C.

9. A method of producing a vulcanized rubber composition, comprising vulcanizing a rubber composition containing a rubber component containing either or both of natural rubber and synthetic isoprene rubber, syndiotactic 1,2-polybutadiene, and silica at a temperature equal to or higher than a melting point of the syndiotactic 1,2-polybutadiene.

10. The method of producing a vulcanized rubber composition according to claim 9, wherein a total content of fillers including silica in the rubber composition is 35 parts by mass to 80 parts by mass with respect to 100 parts by mass of the rubber component.

11. The method of producing a vulcanized rubber composition according to claim 9 or 10, wherein a content of the silica in the rubber composition is 12 parts by mass or more with respect to 100 parts by mass of the rubber component.

12. The method of producing a vulcanized rubber composition according to any one of claims 9 or 11, wherein a number average molecular weight of the syndiotactic 1,2-polybutadiene is 50,000 to 500,000.

13. The method of producing a vulcanized rubber composition according to any one of claims 9 or 12, wherein a crystal content of the syndiotactic 1,2-polybutadiene is 7 J/g to 40 J/g.

14. The method of producing a vulcanized rubber composition according to any one of claims 9 or 13, wherein a melting point of the syndiotactic 1,2-polybutadiene is 100 °C to 180 °C.

15. A tire using the vulcanized rubber composition according to any one of claims 1 or 8 in a tread member.
